## Europäisches Patentamt
## European Patent Office
## Office européen des brevets

(11) Publication number: **0 216 549**
A2

# (12) EUROPEAN PATENT APPLICATION

(21) Application number: **86306875.5**

(22) Date of filing: **05.09.86**

(51) Int. Cl.⁴: **B 62 D 33/08**

(30) Priority: **11.09.85 GB 8522469**

(43) Date of publication of application:
**01.04.87 Bulletin 87/14**

(84) Designated Contracting States:
**FR GB NL**

(71) Applicant: **BOALLOY LIMITED**
Radnor Park Trading Estate West Heath
Congleton Cheshire CW12 4QA(GB)

(72) Inventor: **Van Dam, Wim**
46 Jubilee Court
Holmes Chapel Cheshire(GB)

(74) Representative: **Massey, Alexander et al,**
MARKS & CLERK Suite 301 Sunlight House Quay Street
Manchester, M3 3JY(GB)

(54) **Curtainsided van bodies.**

(57) A curtainsided van body comprises a bed, a roof and a supporting structure at each end, i.e. front and back, of the van body and extending between the bed or roof to support the latter above the bed. The van body is characterised in that there is provided at each corner of the roof, between the roof and respective supporting structure, a lever system adapted to pre-stress the roof upwardly, whereby roof sag resulting from curtain vertical tensioning conditions is obviated or mitigated. Each lever system comprises a lifting lever secured to a cant rail of the roof framework at each corner and a cranked lever or similar pivoted at one end to the lifting lever and having its other end bearing on an abutment on the respective supporting structure. The abutments are adjustable to permit variation in the pre-stressing forces applied to the roof.

EP 0 216 549 A2

0216549

## CURTAINSIDED VAN BODIES

This invention relates to van bodies, especially curtainsided van bodies such as are disclosed, for example in our United Kingdom Patents Nos. B1262879 and B1262880.

With long curtainsided van bodies, for example in curtainsided vehicles 12 metres in length, it is customary to support the roof not only at the ends, i.e. front and back of the van bodies, but also intermediate the ends by posts or pillars extending between the roof and bed of the van body. It will be manifest that the provision of one or more intermediate posts or pillars creates an impediment to the completely free access to the open lateral side of the van body which is most desirable. Attempts have been made to overcome this drawback by providing intermediate posts or pillars which can be swung outboard through 90° to widen the length of spacing between an end of the van body and an intermediate post or pillar (see our European Patent Application No. 81 304 855.0). However, a totally free access length between the ends of the van body is the most desirable condition for loading and unloading.

The need to provide this intermediate support between the bed and roof of long curtainsided van bodies stems from the fact that when a curtain is drawn along an open lateral side of the van body to close same the curtain is then tensioned in both the horizontal and vertical planes. Without such intermediate support vertical tensioning causes the roof to sag and it is an object of the present invention to provide a long curtainsided van body without intermediate support between the bed and roof in which roof sag is obviated or mitigated when the curtain is vertically tensioned.

According to the present invention there is provided a curtainsided van body comprising a bed, a roof and a supporting structure at each end, i.e. front and back, of the van body and extending between the bed or roof to support the latter above the bed, the van body being characterised in that there is provided at each corner of the roof, between the roof and respective supporting structure, a lever system adapted to pre-stress the roof upwardly, whereby sag in the roof resulting from curtain vertical tensioning conditions is obviated or mitigated.

Preferably, each lever system comprises a lifting lever secured to a cant rail of the roof framework at each corner and a cranked lever or similar pivoted at one end to the lifting lever and having its other end bearing on an abutment on the respective supporting structure.

Preferably the lifting lever is pivoted at one end to the cant rail with the cranked lever or similar being pivoted to the other end of the lifting lever.

Alternatively the lifting lever is welded or bolted to the cant rail, the cranked lever or similar being pivoted to the end of the lifting lever adjacent the respective supporting structure.

Preferably the abutment is adjustable to permit variation in the pre-stressing forces applied to the roof.

The abutment is preferably a rubber sandwich mounting, and the adjustment is preferably effected by shimming. Thus resilience is imparted to the roof (i.e. the rubber sandwich mounting), and the pre-stressing of the roof can be "tuned" (i.e.

- 3 -

0216549

shimming).

Each cant rail of the roof framework is preferably pre-arched upwards before the roof framework is fitted to the end supporting structures.

The front supporting structure is preferably a bulkhead but the rear supporting structure may be either a fixed bulkhead or a door archway, i.e. there is rear access to the van body interior through doors.

The abutments are preferably mounted on the bulkheads but where a rear door archway is provided the abutments will be mounted on the vertical frame members (pillars or posts) of the archway.

It is also envisaged that instead of abutments and shims being used to provide and adjust the pre-stressing an adjustable mechanical arrangement, for example, a screw jack or other similarly functioning mechanism may be employed.

The cranked lever is preferably connected to its lifting lever _via_ a pivot bearing.

With a 12 metre long curtainsided van body, it is envisaged each lever system will have a length of 2.5 metres, i.e. the distance between the ends or the pivot points of the lifting lever.

An embodiment of the present invention will now be described, by way of example, with reference to the accompanying drawings, in which:-

Fig. 1 is a diagrammatic side elevation of a curtainsided vehicle embodying the present invention;

Fig. 2 is a side elevation of the pre-stressing lever system provided at each front corner of the roof, the cant rail, roof and front bulkhead being shown diagrammatically;

Fig. 3 is a perspective view of the pre-stressing lever system;

Fig. 4 is a fragmentary sectional plan view of

one corner of the roof;

Fig. 5 is a fragmentary end view of the roof corner of Fig. 4; and

Fig. 6 is a detail view of the connection between the lifting lever and the roof cant rail.

The curtainsided van body 10 is say 12 metres long comprising a roof 11 supported above a bed 12 by front and rear bulkheads 13 and 14 respectively. The roof 11, as can be seen, is not directly supported between the bulkheads 13, 14, i.e. no intermediate side posts or pillars.

The side curtains of the curtainsided van body have not been shown but they may be substantially as disclosed in our aforementioned Patents. The vertical and horizontal tensioning assemblies may vary from those disclosed in our aforesaid Patents but, in general terms, the vertical tensioning assembly comprises straps or similar connected to or associated with each curtain, each strap having an individual tensioning device or buckle and a rave or floor engaging hook or similar, while the horizontal tensioning assembly comprises a fixed pole at one end of the curtain and a rotatable pole at the other end of the curtain, rotation of the latter pole effecting the horizontal tensioning of the curtain. Such tensioning assemblies are well known to those skilled in the art of curtainsided van bodies.

The roof 11 comprises a framework including along each side a cant rail 15, which rails are preferably pre-arched upwardly prior to the roof framework being fitted to the bulkheads 13, 14.

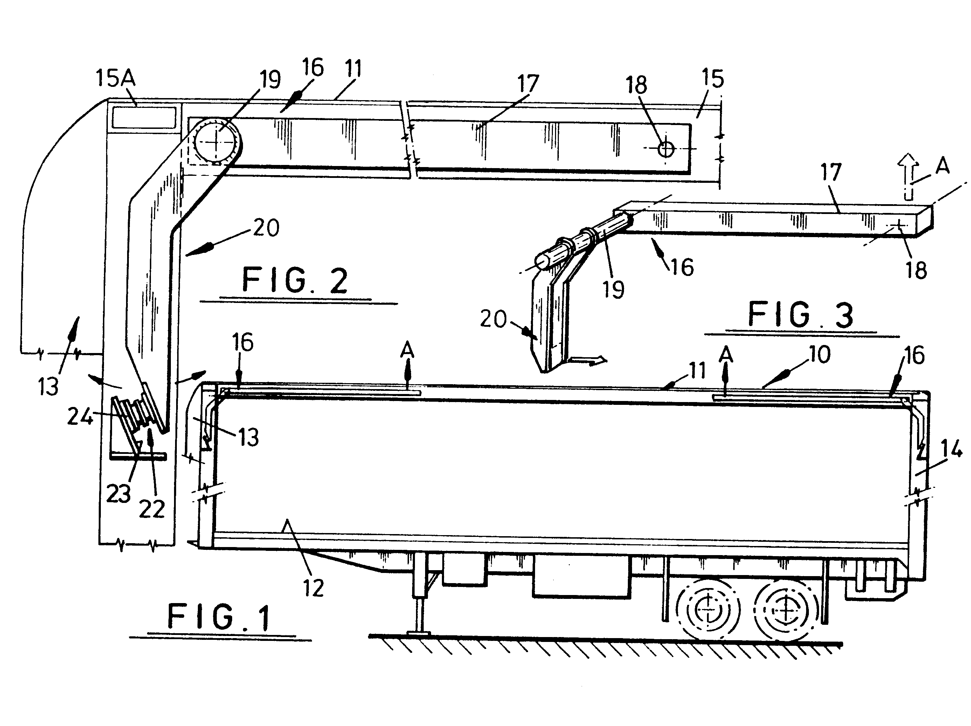

In Fig. 2 there is shown the front bulkhead 13 and the roof front rail 15A which extends between and interconnects the two cant rails 15. A similar roof rear rail (not shown) is provided at the rear bulkhead or door structure 14.

A pre-stressing lever system 16 is provided for each corner of the roof 11 to counteract the aforesaid roof sag which would otherwise result from vertical tensioning of the curtains.

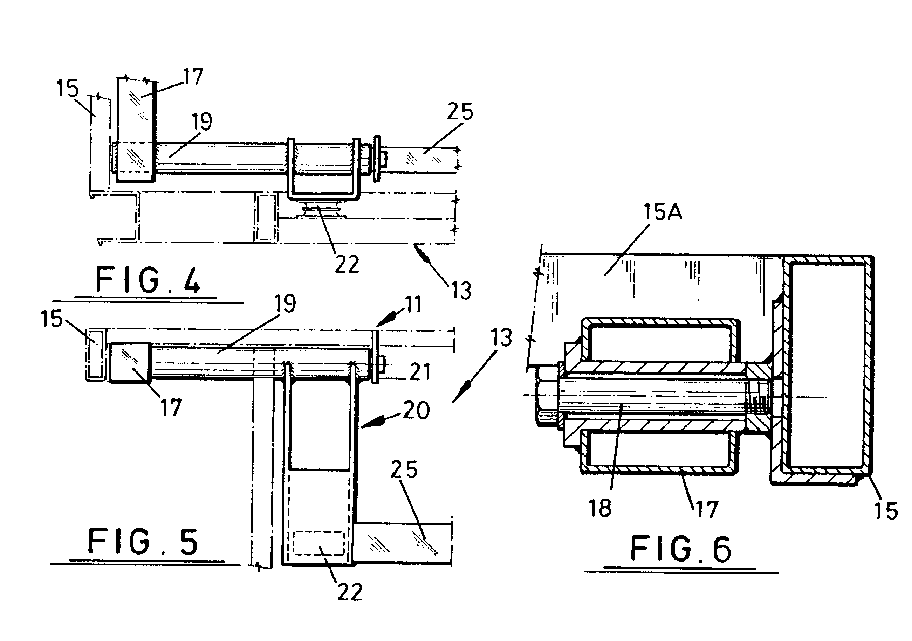

Each pre-stressing lever system 16 is disposed inboard of its respective cant rail 15 and comprises a box section lifting lever 17 pivoted at one end to the inside of the cant rail 15 by a pin bearing 18 (see Fig. 6). This lever 17 at its other end is connected by a pivot rod 19 to one end of a cranked lever 20, the pivot rod 19 at its cranked lever end being rotatably supported in a plate or bracket 21 secured to, or forming part of, the roof 11.

For a 12 metre long curtainsided van body the distance between pivots 18 and 19 is 2.5 metres.

The other end of the cranked lever 20 bears against a rubber sandwich mounting 22, such as that sold under the Registered Trade Mark "METALISTIK", which is mounted on an angle bracket 23 fixed to its respective bulkhead 13 or 14 to pre-stress the lever system 16.

These rubber sandwich mountings 22 impart a resilient characteristic to the roof 11.

A shim or shims 24 can be interposed between the rubber sandwich mounting 22 to vary the degree of pre-stressing to elevate the roof 11 by pivoting the lifting levers 17 in the direction of arrows "A". It will be manifest that the thicker the shimming, the greater the pre-stressing, the greater the roof elevation and consequently the greater the resistance to sag.

The cranked levers 20 are of U-configuration in plan view and the two cranked levers 20 adjacent to and abutting, each bulkhead 13 or 14 are joined by a cross tube or bar 25 to ensure that uniform shimming is effected and that consequently no twisting is imparted to the roof 11.

CLAIMS:

1. A curtainsided van body comprising a bed, a roof and a supporting structure at each end, i.e. front and back, of the van body and extending between the bed or roof to support the latter above the bed, the van body being characterised in that there is provided at each corner of the roof, between the roof and respective supporting structure, a lever system adapted to pre-stress the roof upwardly, whereby sag in the roof resulting from curtain vertical tensioning conditions is obviated or mitigated.

2. A curtainsided van body as claimed in claim 1, in which each lever system comprises a lifting lever secured to a cant rail of the roof framework at each corner and a cranked lever or similar pivoted at one end to the lifting lever and having its other end bearing on an abutment on the respective supporting structure.

3. A curtainsided van body as claimed in claim 2, in which the lifting lever is pivoted at one end to the cant rail with the cranked lever or similar being pivoted to the other end of the lifting lever.

4. A curtainsided van body as claimed in claim 2, in which the lifting lever is welded or bolted to the cant rail, the cranked lever or similar being pivoted to the end of the lifting lever adjacent the respective supporting structure.

5. A curtainsided van body as claimed in any one of claims 1 to 4, in which the abutment is adjustable to permit variation in the pre-stressing forces applied to the roof.

6. A curtainsided van body as claimed in claim 5, in which the abutment is a rubber sandwich mounting, and the adjustment is effected by shimming.

0216549

7. A curtainsided van body as claimed in any one of claims 2 to 5, in which abutment adjustment is effected by an adjustable mechanical arrangement, for example, a screw jack or other similarly functioning mechanism may be employed.

8. A curtainsided van body as claimed in any one of claims 1 to 7, in which each cant rail of the roof framework is pre-arched upwards before the roof framework is fitted to the end supporting structures.

9. A curtainsided van body as claimed in any one of claims 1 to 8, in which the front supporting structure is a bulkhead but the rear supporting structure is either a fixed bulkhead or a door archway, i.e. there is rear access to the van body interior through doors.

10. A curtainsided van body as claimed in claim 9, in which the abutments are mounted on the bulkheads but where a rear door archway is provided the abutments are mounted on the vertical frame members (pillars or posts) of the archway.

15A 19 16 11 17 18 15

FIG. 2

20

13

24

23 22

16

13

A

12

FIG. 1

17 A

18

16 19

20

FIG. 3

11 A 10 16

14

1—2

0216549

0216549

FIG. 6

FIG. 4

FIG. 5